# EUROPÄISCHE PATENTSCHRIFT

(11) **EP 4 267 389 B1**
(45) Veröffentlichungstag und Bekanntmachung des Hinweises auf die Patenterteilung: **20.11.2024**
(21) Anmeldenummer: 21836151.7
(22) Anmeldetag: 13.12.2021
(51) Int. Cl.: B32B 5/26, B32B 5/02, D04H 1/498, D04H 1/732, D04H 5/02, D04H 5/03, D21F 1/02, D21F 1/66

(54) **VORRICHTUNG ZUR HERSTELLUNG EINER VERBUNDVLIESWARENBAHN**
DEVICE FOR PRODUCING A COMPOSITE NONWOVEN WEB
DISPOSITIF DE FABRICATION D'UNE BANDE DE TISSU NON-TISSÉ COMPOSITE

(30) Priorität: 22.12.2020 DE 102020134721
(43) Veröffentlichungstag der Anmeldung: 01.11.2023
(73) Patentinhaber: Andritz Küsters GmbH, 47805 Krefeld (DE)
(72) Erfinder: VOMHOF, Henning, 50678 Köln (DE); REITER, Andreas, 59821 Arnsberg (DE); LATENDORF, Dennis, 47798 Krefeld (DE)
(74) Vertreter: Kluin Patent
(86) Internationale Anmeldenummer: PCT/EP2021/085456
(87) Internationale Veröffentlichungsnummer: WO 2022/135995

(56) Entgegenhaltungen:
- WO-A1-2005/118934
- WO-A1-2006/001739
- US-A- 1 945 118

## Beschreibung

Die Erfindung betrifft eine Vorrichtung zur Herstellung einer Verbundvlieswarenbahn mit mindestens zwei Lagen, wobei die erste Lage Langfasern und die zweite Lage Kurzfasern umfasst und eine zweite Breite aufweist.

Unter "Langfasern" sind im Zusammenhang mit der Erfindung Spinnvliese, bei denen die Faserlänge gegen unendlich gehen kann, oder solche Fasern zu verstehen, die wesentlich, bspw. etwa um eine Größenordnung, länger sind als die Kurzfasern. Die Langfasern können bspw. eine Länge zwischen 10 und 150 mm aufweisen. Sie können aus der Gruppe der Kunst - und/oder Synthetikfasern ausgewählt sein, insbesondere aus Viskose-, Polyester-, Polypropylen-, Polyamid-, Polyacryl-, Polyvinylalkohol- und Polyethylenfasern als solche oder als Gemisch. Auch können als Langfasern natürliche Fasern Verwendung finden, bspw. ausgewählt aus der Gruppe der Baumwoll-, Hanf-, Flachs-, Jute-, oder Bambusfasern, als solche oder als Gemisch, auch mit solchen aus der Gruppe der Kunst und/oder Synthetikfasern. Darüber hinaus können auch Langfasern aus Biopolymeren, bspw. Polyactid oder Polyhydroxybutyrat, als solche oder als Gemisch, auch mit solchen aus der Gruppe der Kunst- und/oder Synthetikfasern und/oder der natürlichen Fasern, Verwendung finden.

Die Kurzfasern können dementsprechend - je nach Längen der Langfasern - Längen im Bereich von 0,2 und 9 mm aufweisen. Sie können insbesondere aus der Gruppe der Naturfasern, insbesondere Faserstoff, auch Pulp genannt, Recyclingfasern, wie Altpapier, künstlich hergestellten Fasern ausgewählt sein, als solche oder als Gemisch.

Derartige Verbundvlieswarenbahnen können insbesondere hergestellt werden, indem inline, d. h. in ein und derselben Fertigungslinie, zunächst mithilfe einer Kardiereinheit, auch "Krempel" genannt, die erste, die Langfasern umfassende Lage, auch "C-Lage" bezeichnet, bereitgestellt wird, auf welche dann die zweite, die Kurzfasern umfassende Lage aufgebracht wird. Dies kann insbesondere mithilfe eines Stoffauflaufsystems geschehen, mit welchem die Kurzfasern - insbesondere in Form einer wässrigen Dispersion - auf die Oberseite der ersten Lage zwischen zwei Rändern über eine sich quer zur Vorderrichtung erstreckende Breite abgegeben werden. Hierzu kann das Stoffauflaufsystem insbesondere einen Stoffauflauf, auch als "head-box" bezeichnet, umfassen, mit welcher die für die gewünschten Eigenschaften der zweiten Lage erforderliche Menge an Fasern bzw. wässriger Dispersion pro Zeiteinheit über eine von zwei Rändern begrenzte Breite auf die Oberfläche der ersten Lage abgegeben wird.

Die erste Lage kann jedoch auch offline, d. h. in einer separaten Fertigungslinie hergestellt worden sein und mit der Vorrichtung zur Herstellung einer Verbundvlieswarenbahn zum Aufbringen der zweiten Lage bereitgestellt werden.

Zum Transportieren der ersten Lage in Förderrichtung ist eine Fördereinrichtung vorgesehen, die unter anderem ein umlaufendes Siebband mit einem oberen Trum umfassen kann, auf welchem die erste Lage zur Bereitstellung aufliegt. Die zweite Lage kann mithilfe des Stoffauflaufsystems, insbesondere der head-box, an die Oberseite der ersten Lage abgegeben wird. In Förderrichtung dahinter erfolgt dann eine Kompaktierung der ersten und der zweiten Lage, bspw. mithilfe einer Wasserstrahlverfestigungseinrichtung.

Nachteilig ist bei einer derartigen Vorrichtung, dass die Breite der zweiten Lage, d. h. deren Ausdehnung quer zur Förderrichtung zwischen ihren Rändern, insbesondere bei Verwendung einer hydraulischen head-box, konstruktionsbedingt nicht ohne negative Beeinflussung der Fluiddynamik verändert werden kann. Für eine Breitenänderung der Verbundvlieswarenbahn kommt daher bisher insbesondere ein Abtrennen der überschüssigen Breite an einem oder an beiden seitlichen Rändern der Verbundvlieswarenbahn nach der Kompaktierung der beiden Lagen in Betracht.

Diese Maßnahme zur Breiteneinstellung der Verbundvlieswarenbahn ist jedoch unvorteilhaft, da die abgetrennten Randbereiche aufgrund der Kompaktierung der Langfasern mit den Kurzfasern nur noch einer Entsorgung zugeführt und die Langfasern und Kurzfasern nicht separiert voneinander wiederverwendet und bspw. dem Herstellungsprozess wieder zugeführt werden können.

WO 2006/001739 offenbart eine Vorrichtung zur Herstellung einer Verbundvlieswarenbahn aufweisend eine erste Lage aus Langfasern und eine zweite Lage aus Kurzfasern.

Der Erfindung liegt daher die Aufgabe zugrunde, eine Vorrichtung zur Herstellung einer Verbundvlieswarenbahn der eingangs genannten Art derart weiterzubilden, dass eine Veränderung der Breite der Verbundvlieswarenbahn unter Wiederverwendbarkeit bspw. durch Rückführung zumindest der abgetrennten Kurzfasern möglich ist.

Diese Aufgabe wird durch die in Anspruch 1 wiedergegebene, erfindungsgemäße Vorrichtung zur Herstellung einer Verbundvlieswarenbahn mit mindestens zwei Lagen, wobei die erste Lage Langfasern umfasst und eine Oberseite und eine erste Breite aufweist, und wobei die zweite Lage Kurzfasern umfasst und eine zweite Breite aufweist, gelöst.

Die erfindungsgemäße Vorrichtung umfasst mindestens eine Fördereinrichtung zum Transportieren mindestens der ersten Lage in einer Förderrichtung und ein Stoffauflaufsystem mit einer insbesondere hydraulischen head-box zur Abgabe der Kurzfasern insbesondere in Form einer wässrigen Dispersion zwischen zwei Rändern über eine sich quer zur Förderrichtung erstreckende Breite. Die erfindungsgemäße Vorrichtung umfasst ferner eine Abfangvorrichtung, mittels welcher ein Teil der von der head-box abgegebenen Kurzfasern im Bereich zumindest eines der beiden Ränder abfangbar ist, bevor die Kurzfasern mit der Oberseite der ersten Lage in Kontakt gelangen. Auf diese Weise ist die Breite der zweiten Lage, auch zweite Breite genannt, reduziert, ohne dass die Auftragseigenschaften der head-box, bspw. deren Fluiddynamik, beeinflusst wären. Die abgefangenen Kurzfasern können dann separat gesammelt und für eine Wiederverwertung bereitgestellt oder in den laufenden Herstellungsprozess rückgeführt werden. Sollte die zweite Breite der zweiten Lage kleiner sein als die erste Breite der ersten Lage, mit anderen Worten nach der Abgabe der Kurzfasern die erste Lage seitlich überstehende Breitenbereiche aufweisen, so können diese in beliebiger Weise abgetrennt und die Langfasern wiederum separat aufgefangen und für eine Weiterverwendung bereitgestellt oder in den laufenden Herstellungsprozess zurückgeführt werden.

Bei einer bevorzugten Ausführungsform der erfindungsgemäßen Vorrichtung umfasst die Abfangvorrichtung mindestens eine Abfangkammer, die auf der der head-box zugewandten Seite eine Eintrittsöffnung und einen von Kurzfasern, die von der head-box abgegeben worden sind, angeströmten Anströmrand aufweist, der von einer Trennwand gebildet ist. Die Trennwand ist derart ausgerichtet und angeordnet, dass sie den Bereich der Breite, indem die Kurzfasern im Betrieb der Vorrichtung abgefangen werden, von dem Bereich der Breite, in dem die Kurzfasern im Betrieb der Vorrichtung auf die Oberseite der ersten Lage abgegeben werden, abtrennt. Mit anderen Worten erzeugt die Trennwand einen Rand der zweiten Lage.

Die Trennwand kann bspw. als Flächenelement mit einer Innenfläche und einer Außenfläche ausgebildet sein, derart, dass sich die Innenfläche zumindest bereichsweise in oder schräg zur Förderrichtung und senkrecht oder schräg zur Oberseite der ersten Lage erstreckt. Aufgrund dieser Maßnahme wird eine scharfe Abtrennung der abgefangenen Kurzfasern von den an die Oberseite der ersten Lage abgegebenen Kurzfasern und somit ein wohldefinierter Rand der zweiten Lage erzielt. Auch kann die Trennwand bspw. gekrümmt oder von einem Teil einer Rohrwandung gebildet sein. Umfasst die Abfangvorrichtung, wie bevorzugt, zwei Abfangkammern, wobei mittels der einen Abfangkammer die im Bereich des einen Randes und mittels der anderen Abfangkammer die im Bereich des anderen Randes die von der head-box abgegebenen Kurzfasern abfangbar sind, kann die zweite Lage mit einer durch die Positionen der Trennwände vorgegebenen, zweiten Breite und mit wohldefinierten Rändern auf die Oberseite der ersten Lage abgegeben werden.

Wenn, wie besonders bevorzugt, zumindest eine der Abfangkammern in Breitenrichtung verlagerbar angeordnet ist, kann die zweite Breite der zweiten Lage verändert werden, ohne dass hierzu der Produktionsprozess unterbrochen oder gar die Vorrichtung umgebaut werden müsste.

Besonders bevorzugt ist eine Ausgestaltung der erfindungsgemäßen Vorrichtung, bei welcher mindestens eine der Abfangkammern eine Bodeninnenwand mit einem Flächenabschnitt umfasst, der bezogen auf die Oberseite der ersten Lage in Förderrichtung gesehen - vorzugsweise stetig - ansteigt und dann - vorzugsweise unstetig, insbesondere stufenartig - abfällt. Es hat sich überraschenderweise gezeigt, dass aufgrund dieser Maßnahme die Fasern abgefangen werden können, ohne dass es zu einem unerwünschten Faserstau in der Abfangkammer kommt, und gleichzeitig ein unerwünschter Rückfluss der Fasern aus der Abfangkammer wirksam verhindert wird.

Weiterhin bevorzugt ist eine Ausgestaltung der erfindungsgemäßen Vorrichtung, bei welcher die Abfangkammer in Aufsicht gekrümmt ausgebildet ist, vorzugsweise etwa um einen Viertelkreis. Diese Ausführungsform zeichnet sich durch besonders gute Strömungseigenschaften auf, die insbesondere verhindern, dass es zu einem Rückstau der abgefangenen, von der head-box abgegebenen Kurzfasern in der Abfangkammer kommt.

Die Abfangkammer umfasst vorzugsweise an dem ihrer Eintrittsöffnung entfernten Ende einen Übergangsbereich, in dem zumindest der Boden, vorzugsweise auch der Deckel, nach unten abfallend ausgebildet sind, beispielsweise etwa parallel zueinander nach unten gekrümmt. Aufgrund dieser Maßnahme sind die Strömungseigenschaften der Abfangkammer weiter verbessert, da der Strom der Kurzfasern ebenfalls nach unten abfällt. Der Übergangsbereich mündet vorzugsweise in einen nach unten gerichteten Trichter mit einem Hals, an den eine Rohrleitung angeschlossen sein kann, über die der Strom der Kurzfasern einer Aufbereitungseinrichtung zuführbar ist.

Besonders bevorzugt ist eine Weiterbildung der erfindungsgemäßen Vorrichtung, bei welcher die head-box um eine etwa parallel zur Oberseite der ersten Lage und etwa quer zur Förderrichtung verlaufende Schwenkachse verschwenkbar angeordnet ist. Aufgrund dieser Maßnahme lassen sich Parameter, unter denen die Kurzfasern auf die Oberseite der ersten Faser auftreffen, wie bspw. Auftreffort, Auftreffwinkel und Auftreffgeschwindigkeit, in Abhängigkeit von Fasereigenschaften und gewünschten Eigenschaften der Verbundvlieswarenbahn variieren.

In einer ersten Variante einer Weiterbildung der erfindungsgemäßen Vorrichtung ist die Abfangkammer mit der head-box - mit Ausnahme einer Verlagerbarkeit in Breitenrichtung der Verbundvlieswarenbahn - fest verbunden. Aufgrund dieser Maßnahme ändern sich die Bedingungen, unter denen von der head-box abgegebene Kurzfasern in die mindestens eine Abfangkammer einströmen, bei einem Verschwenken der head-box um die Schwenkachse nicht, und es kann eine Abdichtung zwischen der Bodeninnenwand und der head-box zwecks der Vermeidung eines Austritts von Fasern in unerwünschten Breitenbereichen auf die Oberseite der ersten Lage auf einfache Weise bewerkstelligt werden.

Nachteilig ist jedoch, dass sich bei einem Verschwenken der head-box um die Schwenkachse die Strömungsrichtung, in der die Kurzfasern in die Abfangkammer hineinströmen, relativ zur Oberseite der ersten Lage ändert. So ist es nicht auszuschließen, dass die Kurzfasern relativ zur Oberseite ansteigend strömen müssen, was die Gefahr der Bildung eines Rückstaus der Kurzfasern in der Abfangkammer erhöht. Auch verändert sich bei einem Verschwenken des Stoffauflaufs der Abstand der Abfangkammer von der Oberseite der ersten Lage, was den Herstellungsprozess der Verbundvlieswarenbahn ebenfalls negativ beeinflussen kann.

Bei einer anderen Variante einer Weiterbildung der erfindungsgemäßen Vorrichtung ist daher die mindestens eine Abfangkammer unabhängig von der head-box angeordnet, sodass ein Schwenken des Stoffauflaufs um die Schwenkachse nicht zu einer Verlagerung der Bodeninnenwand relativ zur Oberseite der ersten Lage führt. Diese Ausgestaltung der erfindungsgemäßen Vorrichtung erfordert daher eine separate Einrichtung, bspw. einen Hilfsrahmen, zur Anordnung der mindestens einen Abfangkammer, was zwar zu einem erhöhten konstruktiven Aufwand führt. Vorteilhaft ist jedoch, dass die mindestens eine Abfangkammer relativ zur head-box positionsvariabel, insbesondere relativ zur Oberseite der ersten Lage höhenverstellbar und weiterhin vorzugsweise parallel zur Oberseite der ersten Lage verlagerbar und so an die jeweiligen Prozessparameter optimal angepasst angeordnet sein kann.

Besonders bevorzugt ist eine Weiterbildung der erfindungsgemäßen Vorrichtung, bei der die Abfangkammer um eine etwa vertikale Achse schwenkbar angeordnet ist, so dass die Trennwand in eine Ausrichtung bringbar ist, in der sie einen sich bezüglich der Förderrichtung öffnenden Freiwinkel ausbildet. Überraschender Weise hat sich gezeigt, dass durch einen Freiwinkel eine Tendenz des Anhaftens auftreffender, von der head-box abgegebener Kurzfasern am Anströmrand reduziert ist, und dies bereits bei einem kleinen Freiwinkel. Der maximale Schwenkwinkel und dementsprechend der Freiwinkel betragen daher vorzugsweise 10°, besonders bevorzugt 5° und weiterhin bevorzugt 3,5°.

Die Abfangkammer kann derart ausgebildet sein, dass die vertikale Achse den Boden der Abfangkammer etwa senkrecht und in Breitenrichtung vorzugsweise etwa mittig zwischen der Trennwand und einer der Trennwand gegenüberliegenden, die Abfangkammer begrenzenden Seitenwand durchsetzt.

Mit der Ausbildung des Freiwinkels einher geht eine Schrägstellung des unteren Randes der Eintrittsöffnung der Abfangkammer derart, dass sich der Abstand des unteren Randes von der head-box zu deren Seitenrand verkleinert. Da die Geschwindigkeit des Stromes der Kurzfasern zu den Seitenrändern der head-box aufgrund von Reibung an der jeweiligen Seitenwand abnimmt, führt die Abstandsverkleinerung dazu, dass die Menge an Kurzfasern, die durch einen zwischen dem unteren Rand der Eintrittsöffnung und der head-box bestehenden Spalt unerwünscht auf die erste Lage gelangen kann, reduziert wird.

Bei einer des Weiteren bevorzugten Ausführungsform der erfindungsgemäßen Vorrichtung umfasst die Abfangvorrichtung eine Rückführeinrichtung, mit welcher abgefangene Kurzfasern dem Stoffauflaufsystem, mittelbar oder unmittelbar, rückführbar sind. Unter "mittelbar rückführbar" ist bspw. zu verstehen, dass die abgefangenen Kurzfasern zu Erleichterung des Abführens aus der Abfangkammer und ggf. des weiteren Transports aus der Abfangkammer unter Einsatz zusätzlicher Flüssigkeit herausgespült werden. Aufgrund des Einsatzes von Spülflüssigkeit bedarf es dann vor der Rückführung in den Prozess eines Aufbereitungsschrittes.

Unter "unmittelbar rückführbar" ist zu verstehen, dass die abgefangenen Kurzfasern ohne jedwede weitere Behandlung dem Herstellungsprozess zurückgeführt werden, wodurch der mit dem Herstellungsprozess verbundene Aufwand gegenüber der mittelbaren Zurückführung reduziert ist. So wird im einfachsten Falle lediglich ein Durchflussmesser, der die rückgeführte Menge an abgefangenen Kurzfasern misst, benötigt, wo hingegen bei einer mittelbaren Rückführung ergänzend zumindest die Dichte an Kurzfasern in der Dispersion erfasst und die Rückführung hinsichtlich der Faserdichte geregelt erfolgen muss.

Des Weiteren bevorzugt ist eine Ausgestaltung der erfindungsgemäßen Vorrichtung, die eine Reinigungsvorrichtung umfasst, mittels welcher der Anströmrand der Trennwand reinigbar ist. Denn es hat sich gezeigt, dass während des Betriebs der Vorrichtung sich Kurzfasern an diesem Rand ablagern, was zu einer Beeinflussung der zweiten Breite der zweiten Lage und zu Einbußen der Qualität des jeweiligen Randes der zweiten Lage führen kann. Die Reinigungsvorrichtung ist vorzugsweise derart ausgebildet, dass die Reinigung des Anströmrandes kontinuierlich erfolgt. Hierzu kann die Reinigungsvorrichtung eine Gasdüse umfassen, die während des Produktionsbetriebs mit unter erhöhtem Druck stehendem Gas, insbesondere mit Druckluft beaufschlagt wird. Die sich am Anströmrand angelagerten Kurzfasern werden dann kontinuierlich abgeblasen mit dem Nachteil, dass zwecks Vermeidung einem unkontrollierten Ausbreiten derselben in der Umgebung ein erhöhter Aufwand betrieben werden muss.

In einer zweiten Variante umfasst die Reinigungsvorrichtung anstelle der Gasdüse eine Flüssigkeitsdüse, die während des Betriebs der Vorrichtung kontinuierlich mit unter einem Überdruck stehender Flüssigkeit, insbesondere Wasser, beaufschlagt wird, sodass am Anströmrand angelagerte Kurzfasern abgespült werden. Zwar ist bei dieser Ausführungsform die Gefahr eines unterwünschten Ausbreitens von Kurzfasern in der Umgebung gegenüber einem Abblasen mit bspw. Druckluft reduziert. Allerdings wird aufgrund der zusätzlichen Reinigungsflüssigkeit eine Aufbereitung der Kurzfasern zwecks Rückführung in dem Herstellungsprozess erforderlich.

Um die Menge der sich am Anströmrand anlagernden Kurzfasern zur reduzieren, können Maßnahmen zum Auftrennen der aus der head-box austretenden Stoffstroms, wie Leitbleche etc. vorgesehen sein.

Die mithilfe der Abfangvorrichtung abgefangenen Kurzfasern können bspw. in einer Bütte oder in einem Standrohr gesammelt und kontinuierlich dem Herstellungsverfahren wieder zugefügt werden.

Ein Ausführungsbeispiel einer erfindungsgemäßen Vorrichtung soll nachfolgend anhand der Figuren näher erläutert werden. Es zeigen schematisch:
- Fig. 1: das Ausführungsbeispiel der erfindungsgemäßen Vorrichtung in einer Seitenansicht;
- Fig. 2: eine Seitenansicht einer Baugruppe mit einer head-box und mit einem ersten Ausführungsbeispiel einer Abfangvorrichtung in einem ersten Betriebszustand;
- Fig. 3: dieselbe Baugruppe in derselben Ansicht in einem zweiten Betriebszustand;
- Fig. 4: dieselbe Baugruppe in einer Ansicht gemäß Fig. 2 von oben;
- Fig. 5: eine Seitenansicht einer Baugruppe mit einer head-box und einem zweiten Ausführungsbeispiel einer Abfangvorrichtung in einem ersten Betriebszustand;
- Fig. 6: dieselbe Baugruppe in derselben Ansicht 5 in einem zweiten Betriebszustand;
- Fig. 7: dieselbe Baugruppe in einer Ansicht gemäß Fig. 5 von oben;
- Fig. 8: ein drittes Ausführungsbeispiel einer Abfangvorrichtung in einer Ansicht gemäß Fig. 5 von oben;
- Fig. 9 a-d: verschiedene Ansichten der Abfangkammer der Abfangvorrichtung gemäß Fig. 8, sowie
- Fig. 10 a-d: Fig. 9 entsprechende Ansichten einer weiteren Ausführungsform der Abfangkammer.

Das in der Zeichnung als Ganzes mit 100 bezeichnete Ausführungsbeispiel der erfindungsgemäßen Vorrichtung umfasst eine Fertigungslinie 1, welche in einer Förderrichtung 2 gesehen hintereinander einen ersten Bereich 3 zum Formieren einer ersten Lage 4, einen zweiten Bereich 5 zum Formieren einer zweiten Lage 6, einen dritten Bereich 7 zum Kompaktieren der ersten Lage 4 und der zweiten Lage 6 zu einer Verbundvlieswarenbahn 8 sowie einen vierten Bereich 9 zum Endbearbeiten und Aufwickeln der Verbundvlieswarenbahn 8.

Ferner umfasst die Vorrichtung 100 eine Fördereinrichtung 10, zu deren Komponenten eine im ersten Bereich 3 vorgesehene Umlenkrolle 11, ein im zweiten Bereich 5 vorgesehenes, vier Umlenkrollen 18 umlaufendes Siebband 12, eine im dritten Bereich 7 vorgesehene Umlenkrolle 13 und eine im vierten Bereich 9 vorgesehene Wickeleinrichtung 14 gehören. Die Fördereinrichtung 10 dient dazu, die ersten und zweiten Lagen 4, 6 und die aus diesen gebildete Verbundvlieswarenbahn 8 in Förderrichtung zu transportieren.

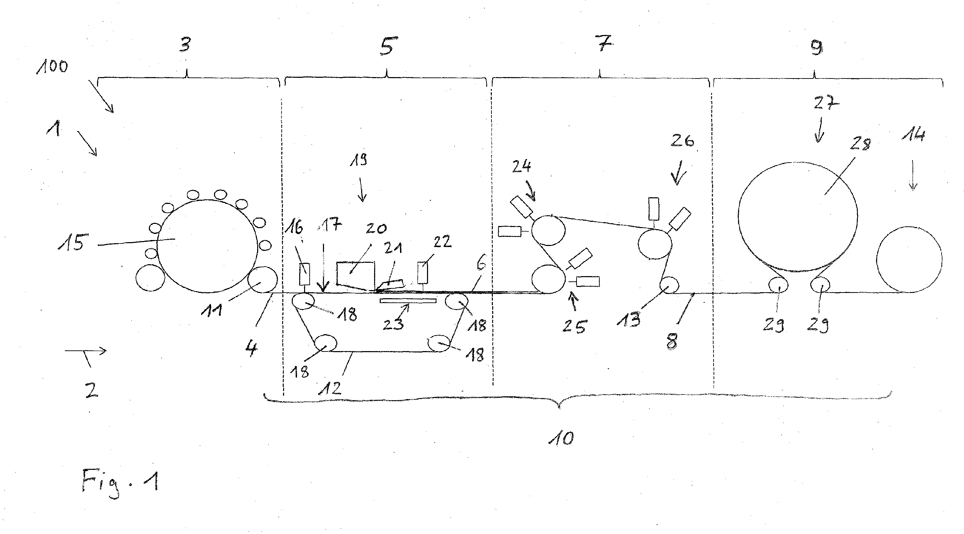

Die in Fig. 1 dargestellte Vorrichtung 100 weist in ihrem ersten Bereich 3 eine Kardiereinheit 15 einer bekannten Bauart zur Bereitstellung der ersten, die Langfasern umfassenden Lage 4 auf.

Die erste Lage 4 wird mithilfe einer Vorverfestigungseinrichtung 16 vorverfestigt, die in Förderrichtung 2 gesehen am Anfang eines oberen Trums 17, welches das Arbeitstrum bildet, des Siebbandes 12 vorgesehen ist.

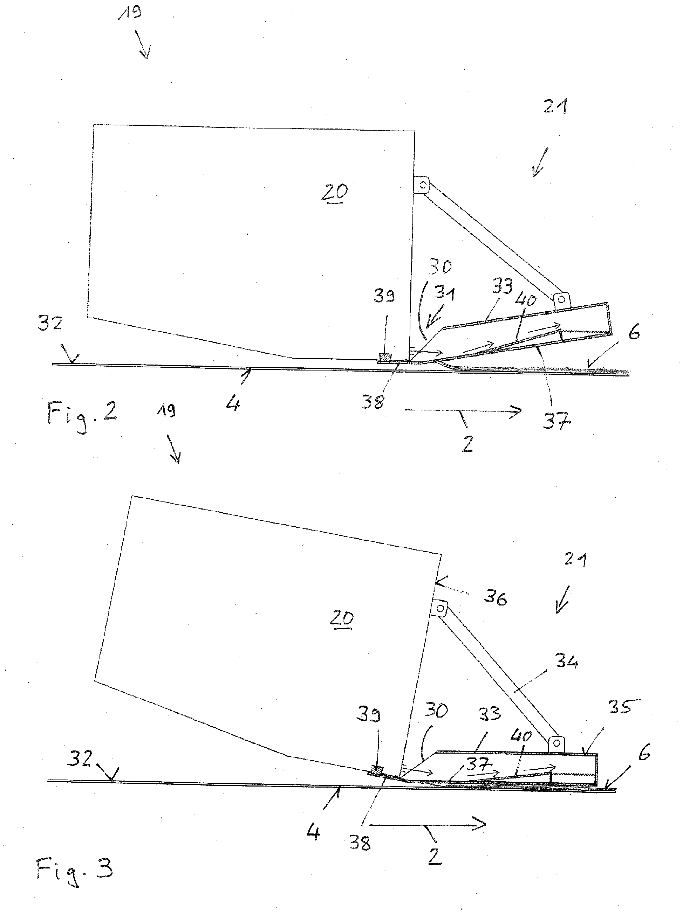

In Förderrichtung 2 gesehen hinter der Vorverfestigungseinrichtung 16 ist ein Stoffauflaufsystem 19 vorgesehen, welches eine head-box 20 umfasst und der Abgabe einer die Kurzfasern enthaltenden, wässrigen Dispersion zwischen Rändern R1 und R2 zur Bildung der zweiten Lage 6 auf der ersten Lage 4 dient. In Förderrichtung 2 gesehen ist hinter der head-box 20 eine Abfangvorrichtung 21 angeordnet. Details von Ausführungsbeispielen der head-box 20 und der Abfangvorrichtung 21 werden weiter unten unter Bezugnahme auf die Figuren 2 bis 7 näher erläutert.

In Förderrichtung 2 gesehen hinter der head-box 20 und der Abfangvorrichtung 21 ist eine weitere Verfestigungsvorrichtung 22 vorgesehen, welche der Vorverfestigung der zweiten Lage 6 dient. Unterhalb des oberen Trumps 17 des Siebbandes 12 in Förderrichtung 2 gesehen hinter der head-box 20 ist eine Wasseraufnahme 23 vorgesehen, mit welcher Wasser der Dispersion sowie - falls es sich bei der weiteren Vorverfestigungseinrichtung 22 um eine Wasserstrahlverfestigungseinrichtung handelt - von dieser abgegebenes Wasser sammelt und abführt.

Der dritte Bereich 7 der Vorrichtung 100 umfasst drei Kompaktiereinrichtungen 24, 25, 26, die wiederum als Wasserstrahlverfestigungseinrichtungen ausgebildet sein können und der Kompaktierung, d. h. der Verbindung der zweiten Lage 6 mit der ersten Lage 4 zur Verbundvlieswarenbahn 8 dienen.

Der vierte Bereich 9 umfasst einen Trommeltrockner 27. Er umfasst eine Trommel 28, um welche die Verbundvlieswarenbahn 8 mithilfe zweier Umlenkrollen 29 herumgeführt wird. In Förderrichtung 2 hinter dem Trommeltrockner 27 wird die Verbundvlieswarenbahn 8 mithilfe der bereits erwähnten Wickeleinrichtung 14 aufgewickelt.

In den Fig. 2 bis 4 ist - schematisch - ein erstes Ausführungsbeispiel einer Baugruppe, die die head-box 20 und die Abfangvorrichtung 21 umfasst, dargestellt. Das Stoffauflaufsystem 19 umfasst die head-box 20, welche der Abgabe der Kurzfasern in Form der wässrigen Dispersion 31 zwischen den Rändern R1 und R2 dient.

In Förderrichtung 2 hinter der head-box 20 ist die Abfangvorrichtung 21 vorgesehen. Sie umfasst eine Abfangkammer 33, auch "catch box" genannt, die bei dem in den Figuren 2 bis 4 dargestellten, ersten Ausführungsbeispiel mit Ausnahme der Möglichkeit einer Verschiebung in einer quer zur Förderrichtung 2 verlaufenden Breitenrichtung 34 fest mit der head-box 20 verbunden ist. Der Stabilisierung dieser Verbindung dient insbesondere eine Strebe 34, die einen oberen Deckel 35 der Abfangkammer 33 mit einer etwa vertikalen Wand 36 der head-box 20 verbindet.

Die Abfangkammer 33 weist einen unteren Boden 37 auf, der einen Bereich 38 umfasst, der bis unterhalb der head-box 20 reicht und an dieser über eine Führungsanordnung 39 anliegt.

Auf Seiten der Bodeninnenwand ist ein Flächenabschnitt 40 vorgesehen, der bezogen auf die Oberseite 32 der ersten Lage in Förderrichtung 2 gesehen stetig ansteigt und dann stufenartig abfällt.

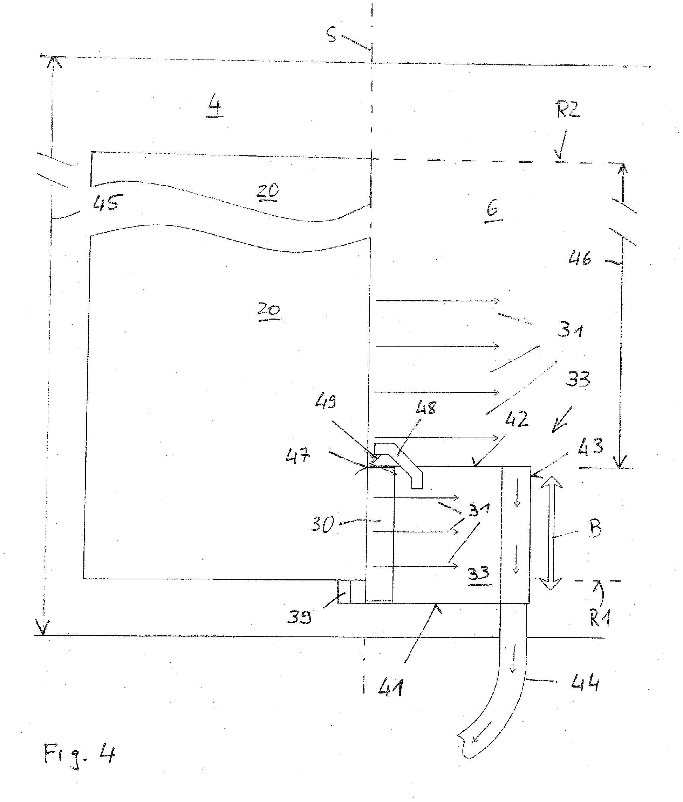

Wie insbesondere in Fig. 4 erkennbar ist, umfasst die Abfangkammer 33 eine äußere Seitenwand 41 und eine gegenüberliegende Trennwand 42, die zusammen mit dem Deckel 35 und dem Boden 37 und einer Rückwand 43 die Abfangkammer 33 begrenzen. Die der head-box 20 zugewandte Seite der Abfangkammer bildet eine Eintrittsöffnung 30 für einen Teil der von der head-box 20 abgegebenen wässrigen Dispersion 31. Wie insbesondere in Fig. 4 erkennbar ist, ist dies der Teil der insgesamt abgegebenen wässrigen Dispersion 31, der in einem durch die Position der Abfangkammer 33 in Breitenrichtung bestimmten Randbereich abgegeben wird. Der Teil der Dispersion 31, der von der head-box 20 gemäß Fig. 4 oberhalb, d.h. in Betriebsstellung der Vorrichtung 100 neben der Außenseite der Trennwand 42 abgegeben wird, gelangt auf die Oberseite 32 der ersten Lage 4, wohingegen der Teil der Dispersion 31, der gemäß Fig. 4 unterhalb, d.h. in Betriebsstellung der Vorrichtung 100 neben der Innenseite der Trennwand 42 abgegeben wird, von der Abfangkammer 33 abgefangen wird, bevor er in Berührung mit der Oberseite 32 der ersten Lage 4 gelangt. Dieser Teil kann somit sortenrein bspw. über eine Rohrleitung 44 einer in den Zeichnungen nicht dargestellten Aufbereitungseinrichtung oder einer in der Zeichnung ebenfalls nicht dargestellten Einrichtung zur Speisung der head-box 20 mit der wässrigen Dispersion zugeleitet werden.

Fig. 4 zeigt eine erste Lage 4 mit einer ersten Breite 45. Wie aus Fig. 4 ferner erkennbar ist, kann die zweite Breite 46 der zweiten Lage 6 verändert werden, indem die Abfangkammer 33 in Breitenrichtung B verlagert wird. Maßgeblich für die zweite Breite 46 ist die jeweilige Positionierung der Trennwand 42, deren der head-box 30 zugewandte Rand einen Anströmrand 47 bildet, welcher im Betrieb der Vorrichtung von der wässrigen Dispersion angeströmt wird.

Um den Anströmrand 47 während des Betriebs der Vorrichtung von hieran abgelagerten Kurzfasern reinigen zu können, ist eine Reinigungsvorrichtung 48 vorgesehen. Sie umfasst eine Gas- oder Flüssigkeitsdüse 49, mittels welcher Gas, insbesondere Luft oder Flüssigkeit, insbesondere Wasser, auf den Anströmrand appliziert werden kann.

Es versteht sich, dass nicht nur, wie in Fig. 4 dargestellt, an einem seitlichen Randbereich der head-box 20 eine Abfangeinrichtung 21, bspw. in Form der dargestellten Abfangkammer 33 vorgesehen sein kann, sondern auch an dem gegenüberliegenden Randbereich, um so die zweite Breite 46 der zweiten Lage 6 von beiden Rändern her beeinflussen zu können.

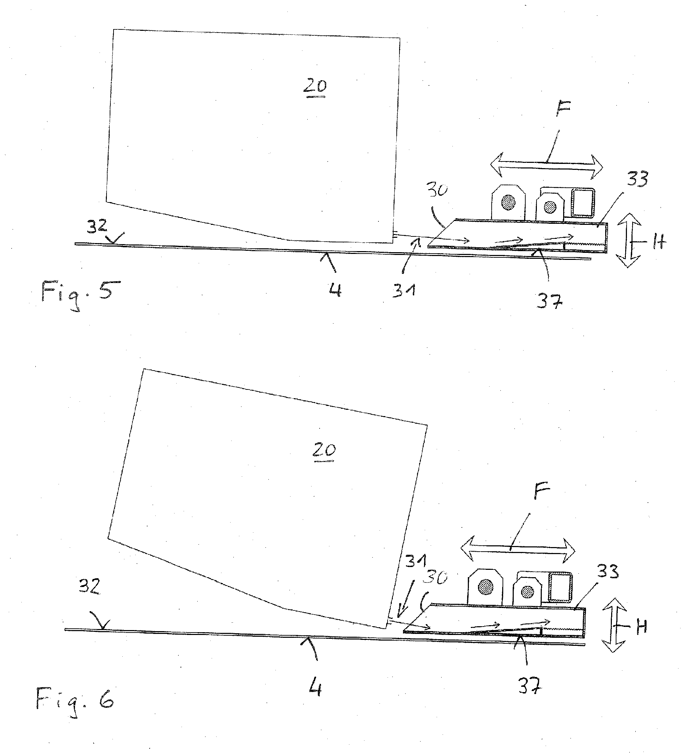

Ein weiteres Ausführungsbeispiel einer Baugruppe, die die head-box 20 und die Abfangvorrichtung 21 umfasst, ist in den Fig. 2 bis 4 entsprechenden Fig. 5 bis 7 dargestellt. Zwecks Vermeidung von Wiederholungen sollen nachfolgend lediglich die Unterschiede zu dem in Fig. 2 bis 4 dargestellten, ersten Ausführungsbeispiel erläutert werden.

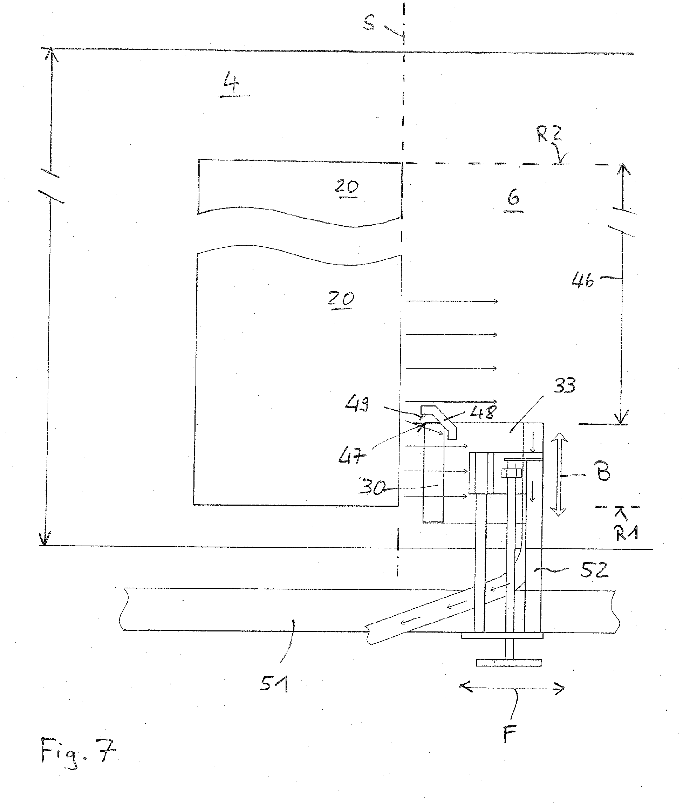

Im Unterschied zum ersten Ausführungsbeispiel ist die Abfangkammer 33 nicht mechanisch mit der head-box 20 verbunden, sondern unter Verwendung eines Hilfsrahmens separat von der head-box 20 gelagert. Hierdurch kann die Abfangkammer 33 unabhängig von der Winkellage der head-box 20 relativ zur Oberseite 33 der ersten Lage 4 mit ihrem Boden 37 parallel zur ersten Lage 4 gehalten werden. Ferner kann die Abfangkammer 33 unabhängig von der head-box 20 in Höhenrichtung H senkrecht zur Oberseite 32 und in Richtung F, nämlich in und entgegen der Förderrichtung 2 verlagert werden. Der in Fig. 7 erkennbare Hilfsrahmen umfasst hierzu eine sich in Richtung F erstreckende erste Führungsanordnung 51, entlang welcher eine zweite Führungsanordnung 52 in F-Richtung verlagerbar ist, an welcher wiederrum die Abfangkammer 33 in B-Richtung verlagerbar angeordnet ist.

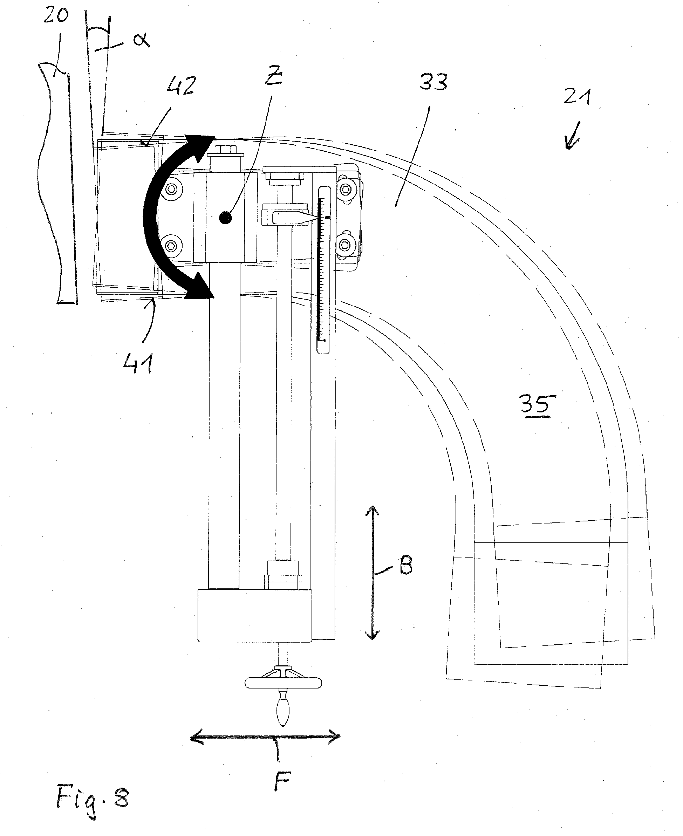

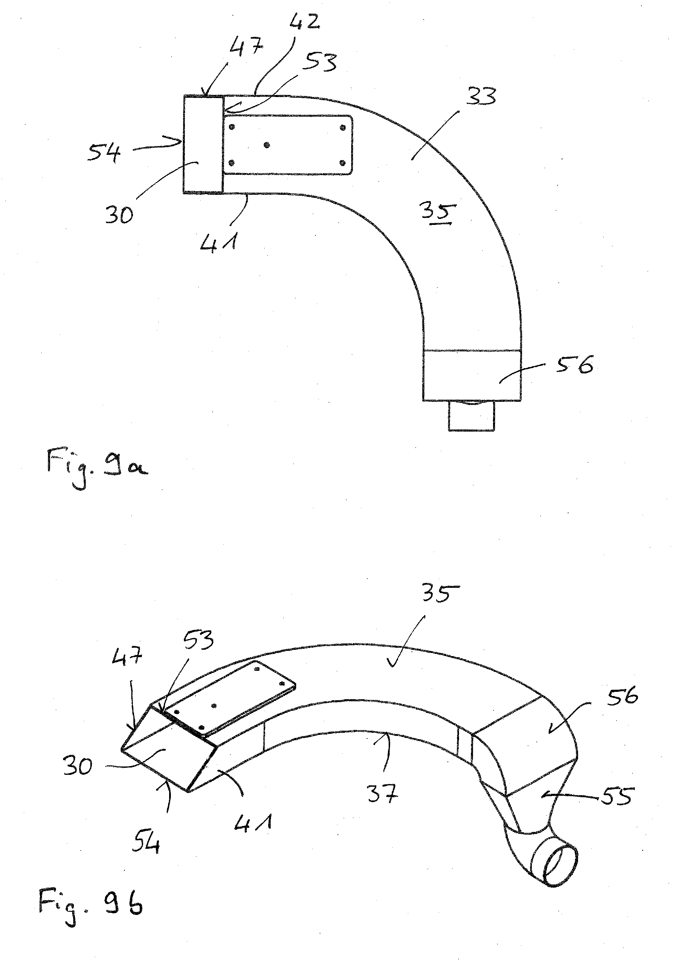

Ein drittes Ausführungsbeispiel einer Abfangvorrichtung 21, bei der die Abfangkammer 33 nicht mechanisch mit der head-box 20 verbunden ist, zeigt Fig. 8. Verschiedene Ansichten eines Ausführungsbeispiels einer Abfangkammer 33 dieses Ausführungsbeispiels sind separat in den Fig. 9a-c dargestellt. Zwecks Vermeidung von Wiederholungen sollen nachfolgend lediglich die Unterschiede zu dem in Fig. 5 bis 7 dargestellten, zweiten Ausführungsbeispiel erläutert werden.

Im Unterscheid zum zweiten Ausführungsbeispiel ist die Abfangkammer 33 unabhängig von der head-box 20 um eine Achse Z schwenkbar angeordnet, die etwa senkrecht zur Breitenrichtung B und zur Richtung F ausgerichtet ist, d.h. etwa in Höhenrichtung H verläuft. Sie durchsetzt den Deckel 35 und den Boden 37 der Abfangkammer 33 etwa senkrecht in Breitenrichtung B etwa mittig zwischen der Seitenwand 41 und der Trennwand 42.

Der maximale Schwenkwinkel α um die Achse Z beträgt bei der dargestellten Ausführungsform 3,5°.

Aufgrund dieser schwenkbaren Anordnung, die in Fig. 8 graphisch verdeutlicht ist, ist es möglich, die Abfangkammer 33 so auszurichten, dass die oberen und unteren Ränder 53, 54 der Eintrittsöffnung 30 nicht senkrecht zur Abgaberichtung A der wässrigen Dispersion 31 aus der head-box 20 verlaufen, sondern schräg hierzu, und der Anströmrand 47 der Eintrittsöffnung 30 ebenfalls schräg angeströmt wird.

Die Abfangkammer 33 ist durch eine entsprechende Ausbildung Ihres Deckels 35 und ihres Bodens 37 in Aufsicht etwa um einen Viertelkreis gekrümmt. Hierdurch werden Verwirbelungen der Strömung der abgeführten Kurzfasern vermieden, die zu einem Stau innerhalb der Abfangkammer führen könnten.

An dem der Eintrittsöffnung entfernten Ende umfasst die Abfangkammer 33 einen nach unten gerichteten Trichter 55. Der Deckel 35 und der Boden 37 sind in einem Übergangsbereich 56 etwa parallel zueinander nach unten gekrümmt, um Verwirbelungen der Strömung zu reduzieren und einen Rückstau der Kurzfasern im Übergangsbereich 56 zu vermeiden.

An den Trichter 55 ist im Betrieb die Rohrleitung 44 angeschlossen, über die die abgeführten Kurzfasern einer Aufbereitungseinrichtung zugeführt werden können.

Zur kontrollierbaren Einstellung der zweiten Breite 46 der zweiten Lage 6 ist die Abfangkammer 33 bei der dritten Ausführungsform an einem spindelbetätigten Linearversteller 57 vorgesehen, der eine Skala 58 zur optischen Erfassung der Position der Abfangkammer 33 in Breitenrichtung B umfasst.

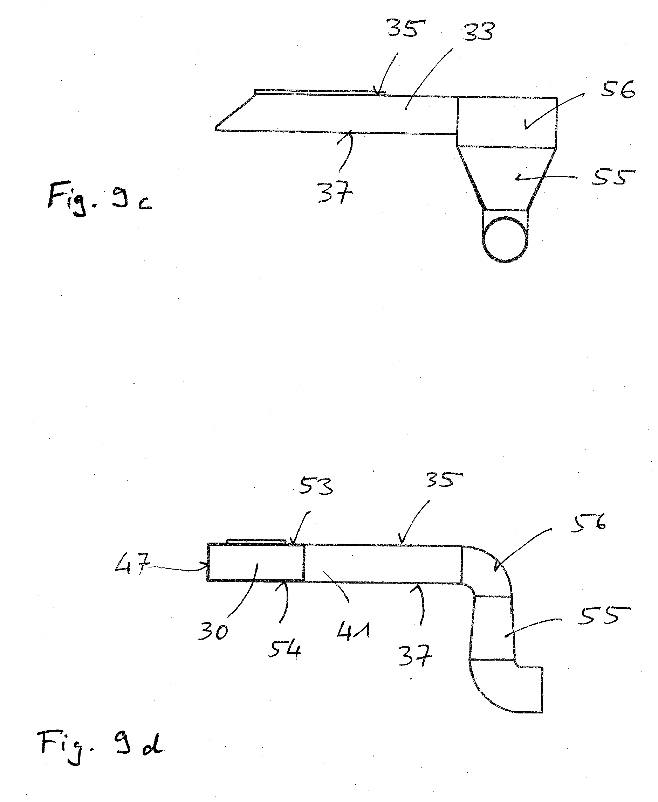

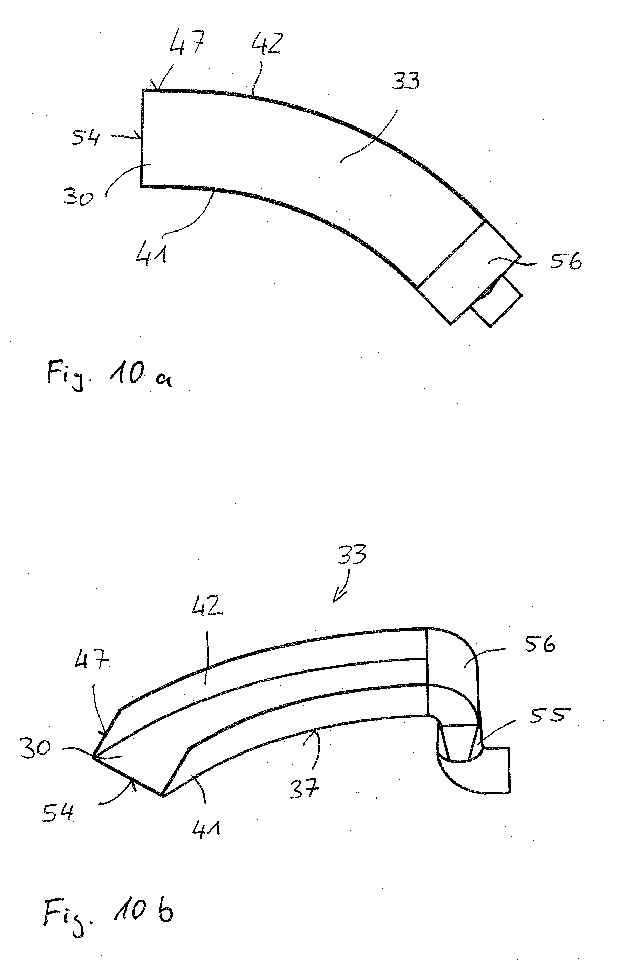

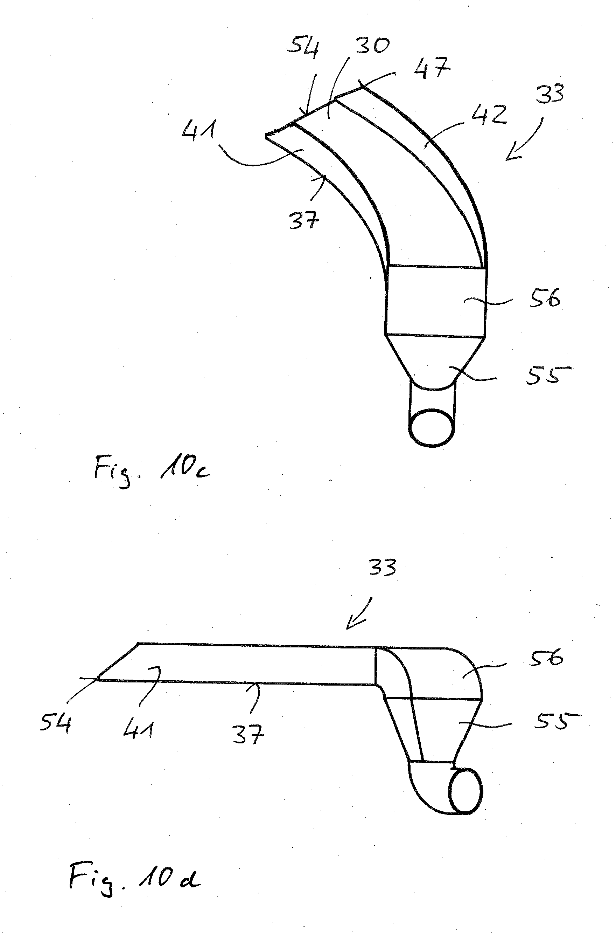

Ein viertes Ausführungsbeispiel einer Abfangkammer 33 ist in den Fig. 10 a-d dargestellt. Zwecks Vermeidung von Wiederholungen sollen nachfolgend lediglich die Unterschiede zu dem in Fig. 9 a-d dargestellten, dritten Ausführungsbeispiel erläutert werden. Darüber hinaus wird auf die voranstehenden Ausführungen zum dritten Ausführungsbeispiel verwiesen.

Bei dem vierten Ausführungsbeispiel ist die Abfangkammer 33 durch eine entsprechende Ausbildung ihres Bodens 37 in Aufsicht nur etwa um einen Achtelkreis mit einem größeren Krümmungsradius gekrümmt. Hierdurch ist der Strömungswiderstand der abgeführten Kurzfasern weiter reduziert. Ferner umfasst das vierte Ausführungsbeispiel der Abfangkammer 33 keinen Deckel, wodurch der Herstellungsaufwand verringert und die Reinigung erleichtert ist.

### Bezuaszeichenliste:

- 100: Vorrichtung
- 1: Fertigungslinie
- 2: Förderrichtung
- 3: erster Bereich
- 4: erste Lage
- 5: zweiter Bereich
- 6: zweite Lage
- 7: dritter Bereich
- 8: Verbundvlieswarenbahn
- 9: vierter Bereich
- 10: Fördereinrichtung
- 11: Umlenkrolle
- 12: Siebband
- 13: Umlenkrolle
- 14: Wickeleinrichtung
- 15: Kardiereinheit
- 16: Vorverfestigungseinrichtung
- 17: oberes Trum
- 18: Umlenkrollen
- 19: Stoffauflaufsystem
- 20: head-box
- 21: Abfangvorrichtung
- 22: weitere Vorverfestigungseinrichtung
- 23: Wasseraufnahme
- 24: Kompaktiereinrichtung
- 25: Kompaktiereinrichtung
- 26: Kompaktiereinrichtung
- 27: Trommeltrockner
- 28: Trommel
- 29: Umlenkrollen
- 30: Eintrittsöffnung
- 31: wässrige Dispersion
- 32: Oberseite
- 33: Abfangkammer
- 34: Strebe
- 35: Deckel
- 36: Wand
- 37: Boden
- 38: Bereich
- 39: Führungsanordnung
- 40: Flächenabschnitt
- 41: Seitenwand
- 42: Trennwand
- 43: Rückwand
- 44: Rohrleitung
- 45: erste Breite
- 46: zweite Breite
- 47: Anströmrand
- 48: Reinigungseinrichtung
- 49: Düse
- 50: Hilfsrahmen
- 51: erste Führungsanordnung
- 52: zweite Führungsanordnung
- 53: oberer Rand
- 54: unterer Rand
- 55: Trichter
- 56: Übergangsbereich
- 57: Linearversteller
- 58: Skala
- A: Abgaberichtung
- B: Richtung
- F: Richtung
- H: Richtung
- R1, R2: Ränder
- S: Schwenkachse
- Z: Achse

## Patentansprüche

1. Vorrichtung (100) zur Herstellung einer Verbundvlieswarenbahn (8) mit mindestens zwei Lagen (4, 6), wobei die erste Lage (4) ein Spinnvlies und/oder Langfasern umfasst und eine Oberseite (32) und eine erste Breite (45) aufweist, und wobei die zweite Lage (6) Kurzfasern umfasst und eine zweite Breite (46) aufweist,
**dadurch gekennzeichnet,**
**dass** die Vorrichtung (100) mindestens eine Fördereinrichtung (10) zum Transportieren mindestens der ersten Lage (4) in einer Förderrichtung (2) und ein Stoffauflaufsystem (19) zur Abgabe der Kurzfasern auf die Oberseite (32) der ersten Lage (4) zwischen zwei sich quer zur Förderrichtung (2) ersteckenden Rändern (R1, R2) umfasst,
und **dass** die Vorrichtung (100) eine Abfangvorrichtung (21) umfasst, mittels welcher ein Teil der vom Stoffauflaufsystem (19) abgegebenen Kurzfasern im Bereich zumindest eines der beiden Ränder (R1,R2) abfangbar ist, bevor die in diesem Bereich abgegebenen Kurzfasern mit der Oberseite (32) der ersten Lage (4) in Kontakt kommen.

2. Vorrichtung nach Anspruch 1, **dadurch gekennzeichnet, dass** die Abfangvorrichtung (21) mindestens eine Abfangkammer (33) umfasst, die eine von einer Trennwand (42) mit einem von abgegebenen Kurzfasern angeströmten Anströmrand (47) begrenzte Eintrittsöffnung (30) aufweist, wobei die Trennwand (42) den Bereich der Breite, in dem die Kurzfasern im Betrieb der Vorrichtung abgefangen werden, von dem Bereich der Breite, in dem die Kurzfasern im Betrieb der Vorrichtung auf die erste Lage (4) abgegeben werden abtrennt, sodass die Position der Trennwand (42) die zweite Breite (46) der zweiten Lage (6) beeinflusst.

3. Vorrichtung nach Anspruch 2, **dadurch gekennzeichnet, dass** die Trennwand (42) als Flächenelement mit einer Innenwand und einer Außenwand ausgebildet ist, derart, dass sich die Innenwand zumindest bereichsweise in Förderrichtung (2) und senkrecht zur Oberseite (32) der ersten Lage (4) erstreckt.

4. Vorrichtung nach Anspruch 2 oder 3, **dadurch gekennzeichnet, dass** die Abfangvorrichtung (21) zwei Abfangkammern (33) umfasst, wobei mittels der einen die im Bereich des einen Randes und mittels der anderen, die im Bereich des anderen Randes die vom Stoffauflaufsystem (19) abgegebenen Kurzfasern abfangbar sind.

5. Vorrichtung nach Anspruch 4, **dadurch gekennzeichnet, dass** zumindest eine der Abfangkammern (33) in Breitenrichtung (B) verlagerbar angeordnet ist.

6. Vorrichtung nach einem der Ansprüche 2 bis 5, **dadurch gekennzeichnet, dass** mindestens eine der Abfangkammern (33) eine Bodeninnenwand mit einem Flächenabschnitt (40) umfasst, der bezogen auf die Oberseite (32) der ersten Lage (4) in Förderrichtung (2) gesehen, vorzugsweise stetig, ansteigt und, vorzugsweise unstetig, insbesondere stufenartig abfällt.

7. Vorrichtung nach einem der Ansprüche 2 bis 5, **dadurch gekennzeichnet, dass** die Abfangkammer (33) in Aufsicht gekrümmt ausgebildet ist.

8. Vorrichtung nach Anspruch 7, **dadurch gekennzeichnet, dass** die Abfangkammer (33) an dem der Eintrittsöffnung (30) entfernten Ende einen nach unten gerichteten Trichter (55) umfasst.

9. Vorrichtung nach Anspruch 8, **dadurch gekennzeichnet, dass** der Boden (37) in einem Übergangsbereich (56) zum Trichter (55) nach unten abfallend ausgebildet ist.

10. Vorrichtung nach einem der Ansprüche 2 bis 9, **dadurch gekennzeichnet, dass** der Stoffauflauf (19) eine head-box (20) umfasst, die um eine etwa parallel zur Oberseite (32) der ersten Lage (4) und etwa quer zur Förderrichtung (2) verlaufende Schwenkachse (S) schwenkbar angeordnet und die mindestens eine Abfangkammer (33) mit Ausnahme einer Verlagerbarkeit relativ zur head-box (20) in Breitenrichtung (B) fest mit der head-box (20) verbunden ist.

11. Vorrichtung nach einem der Ansprüche 2 bis 9, **dadurch gekennzeichnet, dass** der Stoffauflauf (19) eine head-box (20) umfasst und die mindestens eine Abfangkammer (33) unabhängig von der head-box (20) verlagerbar angeordnet ist, vorzugsweise relativ zur Oberseite (32) der ersten Lage (4) höhenverstellbar und/oder parallel zur Oberseite (32) der ersten Lage in oder entgegen der Förderrichtung (2).

12. Vorrichtung nach Anspruch 11, **dadurch gekennzeichnet, dass** die Abfangkammer (33) um eine vertikale Achse (Z), die vorzugsweise den Boden (37) der Abfangkammer (33) etwa senkrecht und vorzugsweise in Breitenrichtung (B) etwa mittig zwischen der Trennwand (42) und einer der Trennwand (42) gegenüberliegenden, die Abfangkammer (33) begrenzenden Seitenwand (41) durchsetzt, um einen Schwenkwinkel (α) verschwenkbar ist, wobei der maximale Schwenkwinkel (α) vorzugsweise 10°, besonders bevorzugt 5° und weiterhin bevorzugt 3,5° beträgt.

13. Vorrichtung nach einem der Ansprüche 1 bis 12, **dadurch gekennzeichnet, dass** die Abfangvorrichtung (21) eine Rückführeinrichtung umfasst, mit welcher abgefangene Kurzfasern dem Stoffauflauf (19) mittelbar oder unmittelbar rückführbar sind.

14. Vorrichtung nach einem der Ansprüche 2 bis 8, **dadurch gekennzeichnet, dass** eine Reinigungseinrichtung (48) vorgesehen ist, mittels welcher der Anströmrand (47) reinigbar ist.

15. Vorrichtung nach Anspruch 9, **dadurch gekennzeichnet, dass** die Reinigungseinrichtung (48) eine Gasdüse oder eine Flüssigkeitsdüse umfasst.

## Claims

1. A device (100) for producing a composite nonwoven web (8) with at least two layers (4, 6), wherein the first layer (4) comprises a spunbond and/or long fibers, and an upper face (32) and a first width (45), and wherein the second layer (6) comprises short fibers and a second width (46),
**characterized in**
**that** the device (100) has at least one conveyor device (10) for transporting at least the first layer (4) in a conveying direction (2), and a headbox system (19) for dispensing the short fibers onto the upper face (32) of the first layer (4) between two edges (R1, R2) extending transversely to the conveying direction (2)
and **that** the device (100) comprises a collecting device (21), by means of which some of the short fibers dispensed from the headbox system (19) can be collected in the region of at least one of the two edges (R1, R2) before the short fibers dispensed in this region come into contact with the first layer (4).

2. The device according to patent claim 1, **characterized in that** the collecting device (21) comprises at least one collecting chamber (33), which comprises an inlet opening (30) limited by a partition (42) with an afflux border (47) towards which the dispensed short fibers are flowing, wherein the partition (42) separates the region of the width, in which the short fibers are collected during operation of the device, from the region of the width in which the short fibers are dispensed onto the first layer (4) during operation of the device so that the position of the partition (42) is affecting the second width (46) of the second layer (6).

3. The device according to patent claim 2, **characterized in that** the partition (42) is formed as a surface element with an inner wall and an outer wall such that the inner wall at least partially extends in the conveying direction (2) and perpendicularly to the upper face (32) of the first layer (4).

4. The device according to patent claim 2 or 3, **characterized in that** the collecting device (21) comprises two collecting chambers (33), wherein, by means of the one collecting chamber the short fibers dispensed by the headbox system (19) in the region of the one edge can be collected and by means of the other collecting chamber the short fibers dispensed in the region of the other edge by the headbox system (19) can be collected.

5. The device according to patent claim 4, **characterized in that** at least one of the collecting chambers (33) is arranged displaceable in width direction (B).

6. The device according to any one of patent claim 2 to 5, **characterized in that** at least one the collecting chambers (33) comprises an inner floor wall with a surface section (40), which, seen in conveying direction (2) with respect to the upper face (32) of the first layer (4), rises preferably steadily and drops discontinuously, preferably stepwise.

7. The device according to any one of patent claim 2 to 5, **characterized in that** the collecting chamber (33) is curved on top view.

8. The device according to patent claim 7, **characterized in that** the collecting chamber (33) comprises a downward facing funnel (55) at the end remote from the inlet opening (30).

9. The device according to patent claim 8, **characterized in that** the bottom (37) is formed inclined downward in a transition area (56) to the funnel (55).

10. The device according to any one of patent claims 2 to 9, **characterized in that** the headbox system (19) comprises a head-box (20), which is pivotably arranged around a pivot axis extending approximately in parallel to the upper face (32) of the first layer (4) and approximately transversely to the conveying direction (2), and the at least one collecting chamber (33), except for a displaceability with respect to the head-box (20), is firmly connected with the head-box (20) in width direction (B).

11. The device according to any one of patent claims 2 to 9, **characterized in that** the headbox system (19) comprises a head-box (20) and the at least one collecting chamber (33) is arranged displaceable independent of the head-box (20), preferably height adjustable with respect to the upper face (32) of the first layer (4), and/or in parallel to the upper face (32) of the first layer (4) in or against the conveying direction (2).

12. The device according to patent claim 11, **characterized in that** the collecting chamber (33) is pivotable by a pivot angle (α) around a vertical axis (Z), which traverses preferably the bottom (37) of the collecting chamber (33) approximately vertically and preferably in width direction (B) approximately centrally between the partition (42) and a side wall (41) facing the partition (42) and limiting the collecting chamber (33), wherein the maximum pivot angle (α) is preferably 10°, particularly preferable 5° and more preferred 3.5°.

13. The device according to any one of patent claims 1 to 12, **characterized in that** the collecting device (21) comprises a return means by means of which collected short fibers can be directly or indirectly returned to the headbox system (19).

14. The device according to any one of patent claims 2 to 8, **characterized in that** a cleaning device (48) is provided by means of which the afflux border (47) can be cleaned.

15. The device according to patent claim 9, **characterized in that** cleaning device (48) comprises a gas nozzle or a liquid nozzle.

## Revendications

1. Dispositif (100) de fabrication d'une bande de tissu non-tissé composite (8) comprenant au moins deux couches (4, 6), la première couche (4) comportant un filé-lié et/ou des fibres longues et un côté supérieur (32) et une première largeur (45), et la deuxième couche (6) comportant des fibres courtes et une deuxième largeur (46),
**caractérisé en ce**
**que** le dispositif (100) comporte au moins un dispositif de transport (10) pour transporter au moins la première couche (4) dans une direction de transport (2) et un système de caisse de tête (19) pour distribuer les fibres courtes sur le côté supérieur (32) de la première couche (4) entre deux bords (R1, R2) s'étendant transversalement à la direction de transport (2),
et **que** le dispositif (100) comporte un dispositif de collecte (21) au moyen duquel une partie des fibres courtes distribuées par le système de caisse de tête (19) peuvent être collectées dans la zone d'au moins un des deux bords (R1, R2), avant que les fibres courtes distribuées dans cette zone ne viennent en contact avec la première couche (4)

2. Dispositif selon la revendication 1, **caractérisé en ce que** le dispositif de collecte (21) comporte au moins une chambre de collecte (33) comprenant un orifice d'entrée (30) délimité par une paroi de séparation (42) avec un bord d'afflux (47) alimenté par des fibres courtes distribuées, dans lequel la paroi de séparation (42) sépare la zone de la largeur, dans laquelle les fibres courtes sont collectées pendant le fonctionnement du dispositif, de la zone de la largeur, dans laquelle les fibres courtes dans le fonctionnement du dispositif sont distribuées sur la première couche (4) de sorte que la position de la paroi de séparation (42) agit sur la deuxième largeur (46) de la deuxième couche (6).

3. Dispositif selon la revendication 2, **caractérisé en ce que** la paroi de séparation (42) est formée en tant qu'élément plat avec une paroi intérieure et une paroi extérieure en sorte que la paroi intérieure, au moins par endroits, s'étend dans la direction de transport (2) et perpendiculairement au côté supérieur (32) de la première couche (4).

4. Dispositif selon la revendication 2 ou 3, **caractérisé en ce que** le dispositif de collecte (21) comporte deux chambres de collecte (33), dans lequel, par l'intermédiaire de l'une, les fibres courtes distribuées par le système de caisse de tête (19) dans la zone de l'un des bords, et par l'intermédiaire de l'autre, les fibres courtes distribuées par le système de caisse de tête (19) dans la zone de l'autre des bords, peuvent être collectées.

5. Dispositif selon la revendication 4, **caractérisé en ce qu'**au moins une des chambres de collecte (33) est agencée déplaçable dans la direction de la largeur (B).

6. Dispositif selon l'une quelconque des revendications 2 à 5, **caractérisé en ce qu'**au moins une des chambres de collecte (33) comporte une paroi intérieure du fond avec une partie de surface (40), qui, vu dans la direction de transport (2), par rapport au côté supérieur (32) de la première couche (4), monte de préférence de manière continue et qui descend de préférence de manière discontinue, en particulier par gradins.

7. Dispositif selon l'une quelconque des revendications 2 à 5, **caractérisé en ce que** la chambre de collecte (33) est courbée en vue de dessus.

8. Dispositif selon la revendication 7, **caractérisé en ce que** la chambre de collecte (33) comporte un entonnoir (55) dirigé vers le bas à l'extrémité éloignée de l'orifice d'entrée (30).

9. Dispositif selon la revendication 8, **caractérisé en ce que** le fond (37) est formé de manière descendante vers le bas dans une zone de transition (56) vers l'entonnoir (55).

10. Dispositif selon l'une quelconque des revendications 2 à 9, **caractérisé en ce que** le système de caisse de tête (19) comporte une caisse de tête (20), qui est disposé de manière à pouvoir pivoter autour d'un axe de pivotement (S) s'étendant à peu près parallèlement au côté supérieur (32) de la première couche (4) et à peu près transversalement à la direction de transport (2) et que l'au moins une chambre de collecte (33), à l'exception d'une capacité de déplacement par rapport à la caisse de tête (20) dans la direction de la largeur (B), est solidaire à la caisse de tête (20).

11. Dispositif selon l'une quelconque des revendications 2 à 9, **caractérisé en ce que** le système de caisse de tête (19) comporte une caisse de tête (20) et l'au moins une chambre de collecte (33) est agencée de manière déplaçable indépendamment de la caisse de tête (20), de préférence réglable en hauteur par rapport au côté supérieur (32) de la première couche (4) et/ou parallèlement au côté supérieur (32) de la première couche (4) dans ou en sens opposé à la direction de transport (2).

12. Dispositif selon la revendication 11, **caractérisé en ce que** la chambre de collecte (33) peut pivoter d'un angle de pivotement (α) autour d'un axe vertical (Z), qui traverse de préférence le fond (37) de la chambre de collecte (33) à peu près verticalement et de préférence dans la direction de la largeur (B) à peu près au milieu entre la paroi de séparation (42) et une paroi latérale (41) opposée à la paroi de séparation (42) et délimitant la chambre de collecte (33), dans lequel l'angle de pivotement (α) maximum est de préférence 10°, particulièrement préféré 5° et toujours préféré 3,5°.

13. Dispositif selon l'une quelconque des revendications 1 à 12, **caractérisé en ce que** le dispositif de collecte (21) comporte un moyen de retour avec lequel des fibres courtes collectées peuvent être retournées au système de caisse de tête (19) directement ou indirectement.

14. Dispositif selon l'une quelconque des revendications 2 à 8, **caractérisé en ce qu'**un moyen de nettoyage (48) est prévu, par l'intermédiaire duquel le bord d'afflux (47) peut être nettoyé.

15. Dispositif selon la revendication 9, **caractérisé en ce que** le moyen de nettoyage (48) comporte une buse à gaz ou une buse à liquide.
